# EUROPEAN PATENT APPLICATION

(11) **EP 1 553 591 A2**
(43) Date of publication of application: **13.07.2005**
(21) Application number: 04016759.5
(22) Date of filing: 15.07.2004
(51) Int. Cl.: G11B 23/30, G11B 23/40, G11B 23/42

(54) **Media control features for a compact disc**

(30) Priority: 06.01.2004 US 752767
(71) Applicant: Hewlett-Packard Development Company, L.P., Houston, Texas 77070 (US)
(72) Inventor: Creel, Kenneth R., Corvallis, OR 97330 (US); Kwasny, David M., Corvallis, OR 97330 (US); McClellan, Paul J., Bend, OR 97709 (US)
(74) Representative: Schoppe, Fritz, Dipl.-Ing.

(57) **Abstract**

A compact disc (100) includes a data-bearing side (101), a label side (110) and media control features (130) indicative of the label side (110). The media control features are readable by a disc drive (120) when the data-bearing side (101) is presented to an optical pickup (121) of the disc drive (120).

## Description

### BACKGROUND

Compact discs (CDs) are a means of easily storing large amounts of data and transferring that data between computers and other electronic devices. Originally, developed for storing music, the compact disc has involved into a device on which any kind of data can be stored, for example, software, computer applications, computer files, audio recordings, video recordings, etc. A compact disc is capable of holding hundreds of megabytes of data. Consequently, the compact disc is a very convenient device on which data can be archived or transferred from one computer or device to another.

The compact disc stores data digitally. Moving around the disc in a spiral track from the outer edge to the center, bits of data are stored on the disc by varying the optical properties of the disc. Data is read from the disc with a tightly focused laser that is either reflected or scattered by successive portions of the disc which are very small and arranged along the spiral track. This selective reflection or non-reflection of the laser conveys the bits of data stored on the disc.

Consequently, to write data to a compact disc, the laser, at a higher intensity, can be used to "burn" or alter the optical properties of very small portions of the disc so that those portions are reflective or non-reflective in a pattern that represents the bits of data to be stored. Most computers now come equipped with a compact disc drive that can both write data to and read data from a compact disc.

### BRIEF DESCRIPTION OF THE DRAWINGS

The accompanying drawings illustrate various embodiments of the present invention and are a part of the specification. The illustrated embodiments are merely examples of the present invention and do not limit the scope of the invention.

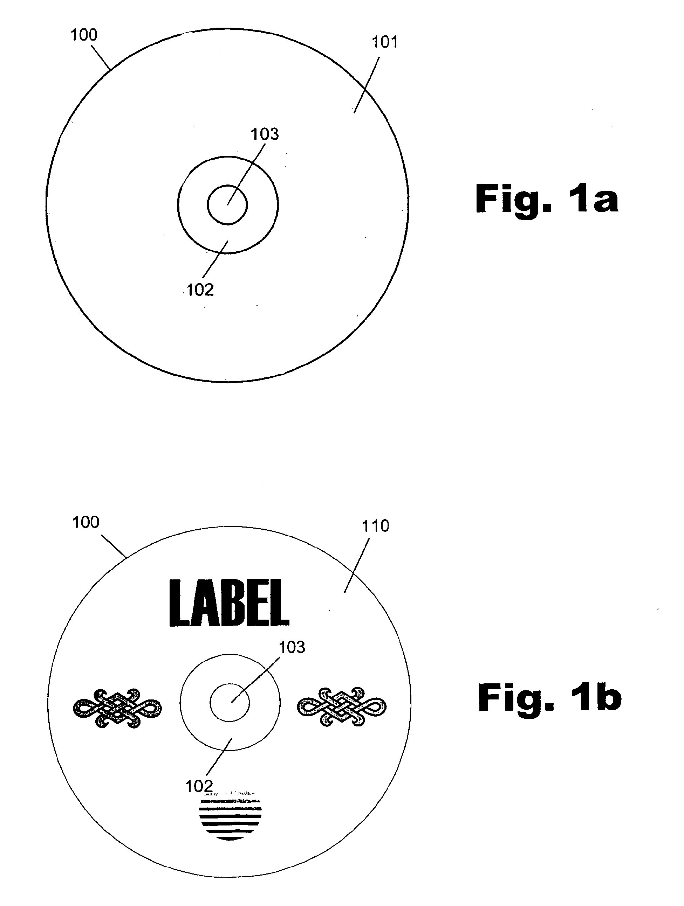

Fig. 1a illustrates the data bearing side of a compact disc according to principles described herein.

Fig. 1 b illustrates the labeled side of the compact disc in Fig. 1 a.

Fig. 2 illustrates the compact disc of Figs 1a and 1 b along with a compact disc drive for writing data to or reading data from the compact disc.

Fig. 3 is a close up illustration of a central portion of the compact disc in Figs. 1 a and 1 b on which control features are provided according to principles described herein.

Fig. 4 illustrates a computer system configured to use the compact disc of Fig. 3, including the control features.

Fig. 5 is a flow chart illustrating one method of using the compact disc with control features of Fig. 3 in the drive of Fig. 2 or the CD drive of the computer system of Fig. 4.

Fig. 6 is a flow chart illustrating software for use on the computer system of Fig. 4 that can make use of the control features of the compact disc of Fig. 3.

Throughout the drawings, identical reference numbers designate similar, but not necessarily identical, elements.

### DETAILED DESCRIPTION

As described herein, media control features which indicate whether a label side of the disc can have a label drawn thereon are formed on a compact disc so as to be read from the data side of the disc or from either side of the disc. Such media control features may be located on the collar of the compact disc, for example. In this way, a disc drive can read the media control features regardless of which side of the disc is presented when the disc is inserted into a disc drive.

As described above, a compact disc is capable of holding hundreds of megabytes of data. Consequently, the compact disc is a very convenient device on which data can be archived or transferred from one computer or device to another. Because so much data and so many kinds of data may be stored on compact discs, it is very helpful if the discs are labeled to indicate what data and what kind of data is recorded on that disc. Additionally, the ability to create a label directly on the disc itself allows users to ensure that the labeling will always be with the disc.

Recently, systems have been developed that allow the same laser that is used to read and write data to a compact disc to also draw a label on the other side of the disc. Such labeling can including both text and graphic elements and allows the user to appropriately label the disc for any variety of personal or commercial uses. Additionally there are separate printing devices, such as an inkjet or thermal transfer printer, which can be used to create a label directly on the label surface of a disc.

As shown in Fig. 1a, the compact disc (100) includes a data-bearing side (101). This side (101) has optical properties that can be changed by a laser of sufficient intensity, as described above, so as to be either reflective or non-reflective. Thus, a pattern of reflective and non-reflective spots can be written on a spiral track from the central portion to the outer edge of the disc (100). The same laser, operated at a lower intensity, is then used to read the pattern of reflective and non-reflective spots to retrieve the data stored on the disc (100).

At the center of the disc (100), there is a round hole or clamping portion (103). When the disc (100) is placed in a disc drive for writing or reading data, the disc (100) is held in the drive by a clamp that extends through the hole (103) and exerts force on the periphery of the hole (103). This clamp is then used to spin the disc (100) so that an optical pickup, that includes the read/write laser, can be moved radially over the disc (100) and so access all portions of the disc (100) due to its own linear motion and the rotation of the disc (100).

The central hole (103) is typically surrounded by a plastic collar (102). This collar (102) is usually formed of a clear or transparent polycarbonate. The collar (102) separates the central hole (103) from the data-bearing surface (101) of the disc (100).

Fig. 1b illustrates the opposite side (110) of the same compact disc (100). As shown in Fig. 1b, the opposite side of the disc (100) is a label side (110). The label for the disc (100) may include any combination of text and graphic elements.

As mentioned above, some new compact discs (100) provide a label side (110) that can be created using the same optical pickup that also writes data to and reads data from the data-bearing side (101) of the disc (100). This is done by providing material or layers of material on the label side (110) of the disc (100) that respond to light and/or heat so as to change in appearance or color. Consequently, the laser of the optical pickup in a CD drive can be used to selectively alter the color or appearance of the material on the label side (110) of the disc (100) so as to draw or create a desired label on the disc (100).

Additionally, some discs may have a label side on which a label can be printed using a separate printing device, such as an inkjet or thermal transfer printer. This is done by providing material or layers of material on the label side (110) of the disc (100) that are compatible with the intended printing methods. The disc is fed through the printing device and the label is printed on the label side of the disc.

As used herein, the term "data-bearing side" will be used to refer to the side of the compact disc on which data is stored, whether or not any data is then recorded on the disc. The opposite side of the disc is referred to as the "label side" whether or not any label has been formed thereon.

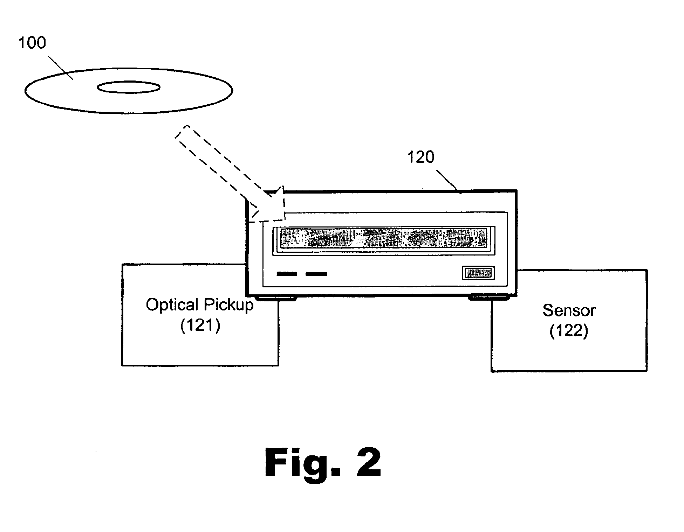

Fig. 2 illustrates the disc (100) with a CD drive (120) including an optical pickup (121). As described above, the disc (100) may be inserted into the drive (120) with either the label side or the data-bearing side facing the optical pickup (121). To read or record data, the disc (100) is inserted into the drive (120) with the data-bearing side being presented to the optical pickup (121). The laser of the optical pickup (121) can then be used to write data to or read data from the disc (100) as has been described above.

If it is desired to create a label on the disc (100), for discs that can be labeled by the optical pickup (121), the disc (100) is inserted into the drive (120) with the label side being presented to the optical pickup (121). The laser of the optical pickup (121) can then be used to create or draw a desired label on the disc (100) by selectively exposing the label side of the disc (100) to a sufficiently intensity laser so as to change the color or appearance of various portions of that surface of the disc (100). Additionally, if it is desired to create a label on the disc (100), for discs that can be printed on by a printing device, the disc (100) is inserted into the printing device with the label side being presented to the printing apparatus.

Typically, a user will insert a disc (100) into a drive (120) with the data-bearing side of the disc being presented to the optical pickup (121). The user then decides what data to store on the disc (100) and only then thinks about how to labei the disc (100). However, not all compact discs have both a data-bearing side and a label side. Conventional compact discs do not include a label side that can be written to with the optical pickup (121). Rather, conventional compact discs are typically labeled, if at all, by handwriting or drawing a label on the disc or on an insert for the case in which the disc will be stored. Consequently, if a disc is inserted into the drive (120) with the data-bearing side presented to the optical pickup (121), and no control features are present indicating that it can be labeled, the drive (120) will not be aware of whether the other side of the disc can be labeled with the optical pickup or a printer.

For discs that can be labeled by the optical pickup (121), the disc manufacturer may provide markings on the disc that can be read by the optical pickup (121) to advise the drive (120) whether and how the label side of the disc can be labeled by the optical pickup (121). Additionally, if the label side of the disc can be printed on by a printing device, the markings may indicate whether and how the label side of the disc can be printed. These markings, known as media control features, can be screen printed or offset printed on the label surface or embossed in the disc. In addition to being read by the optical pickup, the media control features may be designed to be read with some other sensor (122) that is installed in and a part of the disc drive (120), such as an optical sensor, a barcode scanner or other scanning/sensing devices.

However, if a disc is inserted into the drive (120) with the data-bearing side presented to the optical pickup (121) rather than the label side, the drive (120) may be unable to determine whether the opposite, label side of the disc can be labeled by the optical pickup (121) or printed on with a printing device. Thus, the processes of storing data to the disc and labeling the disc are typically performed sequentially with the disc (100) being ejected from the drive (120), flipped over and reinserted into the drive (120) between the steps of writing data to the disc (100) and designing and/or writing a label to the disc (100).

Because writing data to the disc may require some period of time, depending on the volume of data being written to the disc, it would be efficient it the design or selection of the label tor the opposite side of the disc could begin while data is being written to the disc. However, until a conventional disc is flipped over, or a user manually inputs the information, the disc drive (120) will be unable to determine whether a label can be written to the disc by the pickup (121) or printed with a printing device. Therefore, design or selection of the label, with appropriate software, typically does not begin until all data has been written to the disc.

The present specification describes media control features which indicate whether a label side of the disc can have a label drawn thereon, where the media control features are formed on a compact disc so as to be read from either side of the disc. Such media control features may be located on the collar of the compact disc, for example. In this way, a disc drive can read the media control features regardless of which side of the disc is presented when the disc is inserted into a disc drive. Consequently, the system can automatically prompt a user to begin designing or selecting a label for a disc, and provide a creation workspace or template optimized for the exact disc to be labeled, even while data is still being written to the data-bearing side of the disc. In addition, if a disc is put into a drive with the label surface presented to the media control feature reader before data has been written to the label surface, information of value to the user for the data writing process can be acquired.

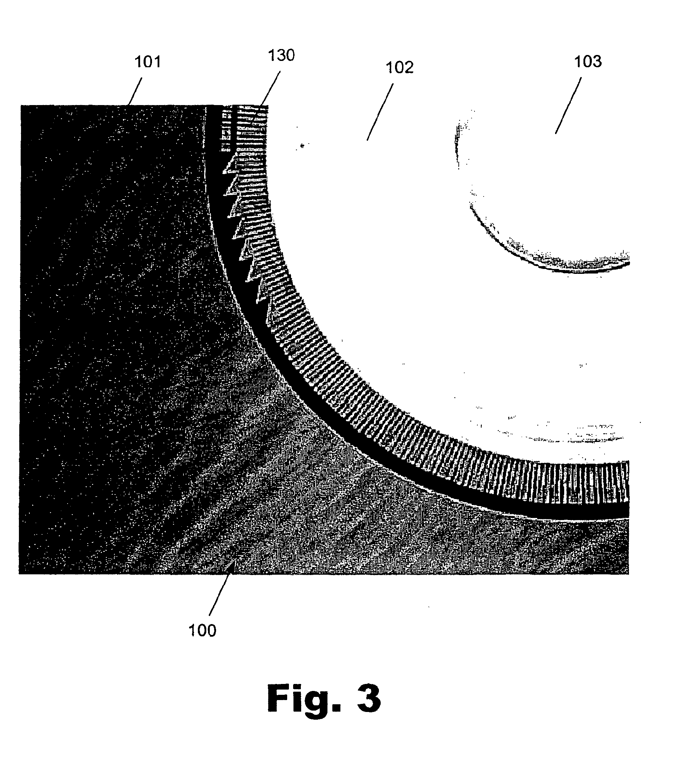

Fig. 3 illustrates the central portion of a compact disc (100) as disclosed herein. As shown in Fig. 3, the collar (102) of the disc (100), between the central hole (103) and the data-bearing surface (101) may include the media control features (130). These features (130) may, for example, be embossed on the collar (102) of the disc (100). Alternatively, these features (130) may be printed or otherwise formed on the collar (102). As described above, the media control features (130) can be read by the optical pickup or other reader or sensor of a disc drive so as to provide the drive with information indicating whether and how the other side of the disc can have a label written thereon by an optical pickup or printed thereon by a printing device.

If the media control features (130) are readable regardless of which side of me disc is presented in the drive, the information regarding the disc and the ability to label the disc will be available as soon as the disc is first placed in the drive. Because the collar (102) is typically transparent, the media control features (130) on the collar (102) may be readable regardless of which side is up when the disc (100) is inserted into a disc drive.

There are a number of possible arrangements in this regard. For example, the media control features may be embossed in the disc so as to be readable from either side. In such a case, the data is transposed from one surface, to match the stream read from the other. Alternatively, the media control features may be embossed in the disc in two locations, one readable from the data side, and one readable from the label side. In such a case, the features may be identical, so they are read correctly from either side or may be transposed on one surface. Alternatively, the media control features may be printed on the disc so as to be readable from either side. In such a case, the data is transposed from one surface, to match the stream read from the other. Or, the features may be printed on both sides of the disc. In such a case, the features may be identical, so they are read correctly from either side or may be transposed on one surface.

Alternatively, the media control features may be readable from only one side of the disc. For example, the media control features may be disposed on the collar (102), but on the data-bearing side of the disc (100) so as to be read when the data-bearing side of the disc is presented to the optical pickup of a disc drive, regardless of whether the collar (102) is transparent. Alternatively, the media control features may be disposed elsewhere on the data-bearing side of the disc. If the media control features and the data-bearing side of the disc are accessible simultaneously, then the recording of data on the disc and the design of the disc label can be performed in parallel to some extent rather than being performed sequentially.

With the media control features (130) readable by the disc drive at the same time the data-bearing surface of the disc is presented, the disc drive can determine whether the disc can be labeled by the optical pickup of the disc drive or by a printing device before the disc is flipped over. Consequently, me user can be prompted to begin designing or selecting a label for the disc and provided with information that helps optimize the label design process. For example, the user can be prompted to design or select a label for the disc while the disc drive is writing data to the data-bearing side of the disc.

If, for example, the label side of a disc is first presented in a disc drive, before data is written to the disc, and if the media control features (130) are readable by the disc drive at the same time the label side of the disc is presented, the disc drive can determine whether the disc can be labeled by the optical pickup of the disc drive or by a printing device and determine the type of data writing that can occur. Consequently, the user can identify the disc type or capacity, which helps optimize the data writing process. For example, the user can determine that the disc is a CD-R business card disc with 40 MB capacity while the label-bearing side of the disc is presented, rather than being forced to present the data-bearing side to determine the type and capacity.

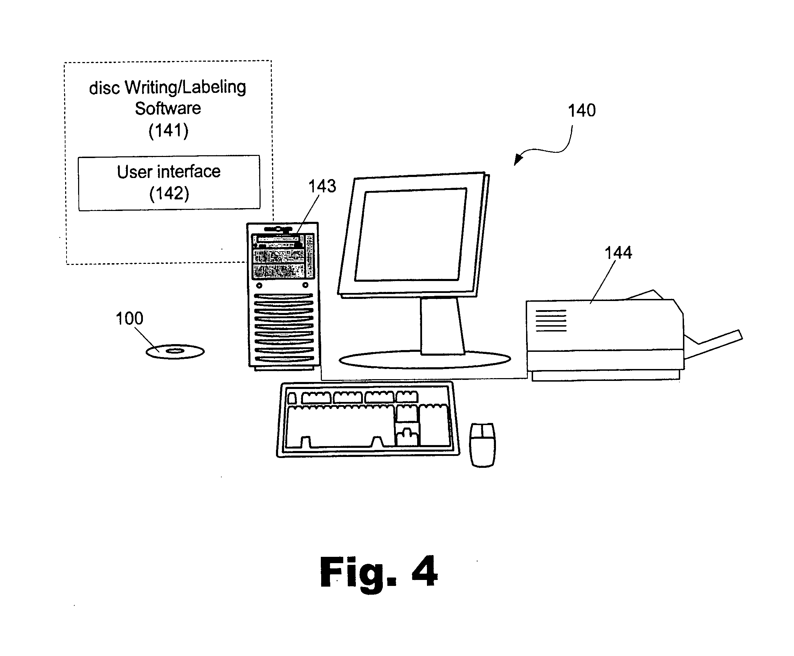

Fig. 4 illustrates a computer system (140) that includes a compact disc drive (143). The drive (143) can be used to write data to and read data from a compact disc (100). If the disc (100) has a label side configured to be drawn on by a disc drive as described above, the drive (143) can also be used to write a label on a label side of the disc (100). Alternatively, if the disc (100) has a label side on that can be printed on, the disc (100) can be run through a printer (144) to receive a desired label. The printer (144) is controlled by the computer (140) to print the desired label on the disc (100) and may be, for example, an inkjet printer, a thermal transfer printer or some other printing device.

The computer (140) has software (141) installed thereon for writing data to a disc (100) and for drawing or printing a label on the disc (100) by controlling the disc drive (143) or the printer (144). These functions may be combined in a single piece of software (141), may be provided in two or more separate pieces of independent software, or may be provided in two or more separate pieces of cooperating software. As illustrated in Fig. 4, this software (141) is installed on the computer (140). This includes storing the software on, for example, a hard drive of the computer (140) in a form that can be executed by the computer (140). Alternatively, the software (141) may be stored uninstalled on any medium for storing computer-readable instructions, such as compact disc.

As described herein, a disc (100) can be inserted into the drive (143) of the computer (140). The user may then, operating the software (141), decide what data to write to the disc (100). This data may be any kind of data, computer files, software, audio, video, etc. A user interface (142) for the software (141 ) allows the user to select data to be stored on the disc (100). When the selection is complete, the software (141) controls the disc drive (143) to write the selected volume of data to the disc (100).

The user also uses the software (141) to design or select a label for the disc (100), assuming a label can be written on the disc by the disc drive (143) or the printer (144). Because the media control features (130, Fig. 3) of the disc (100) are readable while the data-bearing side of the disc (100) is presented, an indication can be provided to the user, through the user interface (142), that the disc can be labeled by the drive (143) or printer (144). Thus, the user can begin designing the label for the disc (100) as soon as the data for the disc (100) has been selected and while that data is being written to the disc (100). In fact, the user interface (142) may prompt the user to design or select a label for the disc as soon as the disc drive (142) starts writing the selected data to the disc (100). Alternatively, the user can design the label for the disc even before selecting the data to be written to the disc. Additionally, the software (141) may have a number of pre-designed labels from which the user can select or can automatically generate a label for the disc based on, for example, disc identification parameters, user preferences, etc.

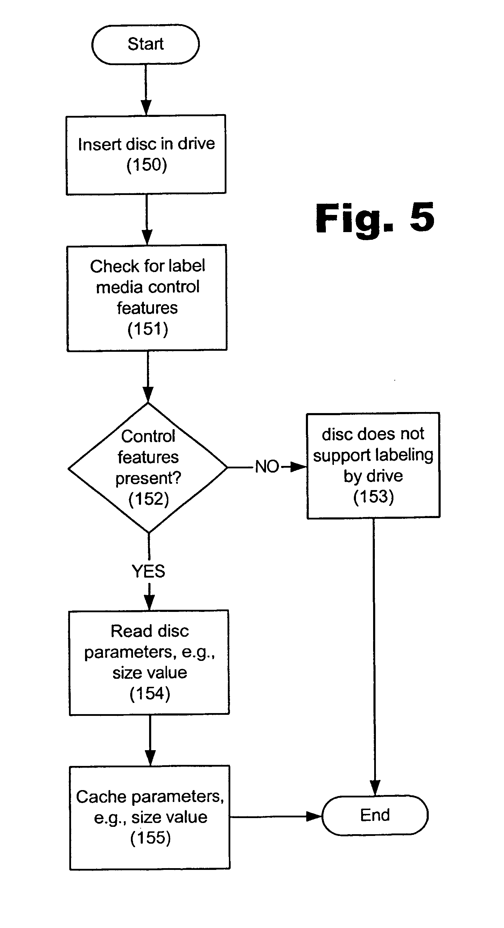

Fig. 5 is a flowchart illustrating one possible method of operating a compact disc drive under the principles described herein. As shown in Fig. 5, the compact disc is inserted into the drive (step 150). The drive may then automatically check the disc for media control features (step 151). In some embodiments, the media control features are disposed on the disc so as to be readable no matter which side of the disc is presented in the drive. In other embodiments, the media control features may be located on the same side of the disc as the data-bearing surface so as to be readable when the data-bearing surface is presented to the disc drive. In some embodiments, the media control features are located on the collar of the disc.

If no media control features are found (determination 152), the disc does not support labeling by the optical pickup of the disc drive (step 153) or a separate printing device. Thus, the disc can be loaded with data, but cannot be labeled by the system and no time will be spent designing a disc label. Rather, the disc can be labeled with a marker or receive an adhesive label. If the disc does have media control features (determination 152), this fact will be recognized by the disc drive and may be cached or immediately reported.

If the disc does have media control features, the disc drive may next read or determine various disc identification parameters specific to the disc that will be used in storing data on the disc and/or creating the labeling for the disc (step 154). Some of these disc identification parameters can typically be determined by reading the data-bearing side of the disc and some or all of the disc identification parameters may be included in the media control features. For example, such disc identification parameters may include the disc type (CD-R, CD-RW, DVD+R, DVD+RW, CD-ROM, DVD-ROM, etc.), the disc capacity, disc dimension values indicating both size and shape, an indication of the label printing properties used for correct image processing. Just like typical printers, these discs may have different coatings that result in different print performance. There may be print settings that are optimized for different disc substrates, just like there are print settings optimized for different paper types (plain paper, photo paper, etc.) label background and marking colors (for a print preview capability), specifications and limits on speed and laser write/read powers to be used, the type of laser to use for labeling, and the size, shape, color, and descriptor of any non-printable, or pre-printed areas. These parameters can then be cached or reported by the disc drive (155). The drive is now ready to assist the software for writing data to the disc and labeling the disc to guide the user through the disc creation process.

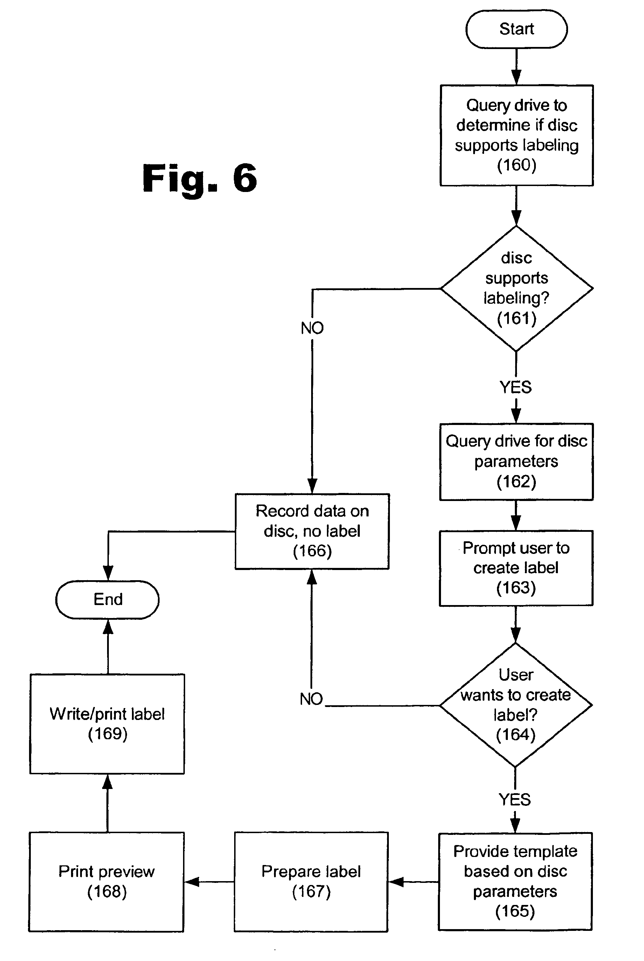

Fig. 6 illustrates a method of operating the software (141) of Fig. 4 and may be considered as a flowchart documenting that software. As shown in Fig. 6, the software can query the disc drive to determine if the inserted disc supports labeling by the optical pickup of the disc drive (step 160) or a separate printer. This fact is determined by the drive by reading the media control features on the disc as described above with reference to Fig. 5. Alternatively, the drive may automatically report on the ability to label the disc without a query from the software.

If the disc does not support labeling (determination 161), data can be written to the disc, but no label will be formed (step 166). However, if the disc does support labeling (determination 161), the software will next query the disc drive for the identification parameters that help determine how to render a label, such as the disc size (step 162). The software can then prompt the user to create or select a label (step 163). As noted above, this prompting can be made as soon as the disc drive starts writing selected data to the disc or earlier.

If the user does not want to create a label (determination 164), then data may be recorded to the disc, but no label is formed (step 166). If the user does wish to design a label (determination 164), then the software can provide a template for the label design or a selection of automatically-generated or pre-created labels (step 165). The template or label will be based on the disc identification parameters, such as the size of the disc, as indicated by the drive in response to the query of step 162. For example, the user can be presented with a template that represents the true size, shape and color of the disc. For example, the size of the disc may be a standard size such as 12 cm or 8 cm. The shape of the disc may be circular or some other shape. The user may also be presented with artwork in the template that matches pre-existing artwork present on the disc, such that the user can add additional text or graphics without overlapping the existing ones. The user can be offered a color palette that matches the capabilities of the media. For example, if the media is monochrome black/white, a black/white grayscale palette may be offered.

The label can then be designed or selected (step 167) using the software (141, Fig. 4). This may include the selection or creation of both text and graphic elements of the label and the arrangement of those elements as they are to appear on the disc. This process of designing the label can advantageously be started while data is being written to the data side of the disc.

After the label is designed, the software may provide a "print preview" feature (step 168) that will display for the user the appearance of the proposed label on the target disc. This print preview can illustrate the exact shape and dimension of the disc, as well as the background and marking colors of the disc. By viewing the designed label at this stage, the user can make any desired changes prior to the label actually being formed on the disc.

Lastly, the disc is flipped to present the label side to the optical pickup of the disc drive. The label is then formed on the disc (step 169). Or, the disc is inserted in a printing device and the label design is sent as a print job to the printing device and printed on the disc (step 169).

The preceding description has been presented only to illustrate and describe embodiments of the invention. It is not intended to be exhaustive or to limit the invention to any precise form disclosed. Many modifications and variations are possible in light of the above teaching. It is intended that the scope of the invention be defined by the following claims.

## Claims

1. A compact disc (100) comprising:
a data-bearing side (101);
a label side (110); and
media control features (130) indicative of said label side (110),
wherein said media control features (130) are readable by a disc drive (120) when said data-bearing side (101) is presented to an optical pickup (121) of said disc drive (120).

2. The disc (100) of claim 1, wherein said media control features (130) are readable by said disc drive (120) irrespective of whether said data-bearing side (101) or said label side (110) is presented to said optical pickup (121).

3. The disc (100) of claim 1, further comprising a collar (102) surrounding a hole (103) in a center of said disc (100).

4. The disc (100) of claim 3, wherein said media control features (130) are disposed on said collar (102).

5. A method of making a compact disc (100) comprising:
forming a data-bearing side (101);
forming a label side (110); and
forming media control features (130) indicative of said label side (110),
wherein said media control features (130) are formed so as to be readable by a disc drive (120) when said data-bearing side (101) is presented to an optical pickup (121) of said disc drive (120).

6. A compact disc drive (120) comprising:
an optical pickup (121) for reading data from and writing data to a compact disc (100) and for reading media control features (130) on a disc (100),
wherein said drive (120) is configured to automatically read media control features (130) on a disc (100) that are readable when a data-bearing side (101) of said disc (100) is presented to said optical pickup (121) of said disc drive (120).

7. A method of operating a compact disc drive (120), said method comprising
automatically reading media control features (130) on a disc (100) that are readable when a data-bearing side (101) of said disc is presented to an optical pickup (121) of said disc drive (120).

8. A method of operating a compact disc drive (120), said method comprising
automatically reading media control features (130) on a disc (100) irrespective of whether a data-bearing side (101) or a label side (110) of said disc (100) is presented to an optical pickup (121) of said disc drive (120).

9. Software (141) for controlling a compact disc drive (120), said software (141) being stored on a medium for storing computer-readable instructions and, when executed by a processor, causing said processor to query said drive (120) to determine if a disc (100) in said drive (120) can be labeled by said drive (120), wherein said query is made before a label side (110) of said disc (100) has been presented to an optical pickup (121) of said drive (120).

10. A method of controlling a compact disc drive (120), said method comprising querying said drive (120) to determine if a disc (100) in said drive (120) can be labeled by said drive (120), wherein said query is made before a label side (110) of said disc (100) has been presented to an optical pickup (121) of said drive (120).
